# EUROPÄISCHE PATENTSCHRIFT

(11) **EP 3 332 737 B1**
(45) Veröffentlichungstag und Bekanntmachung des Hinweises auf die Patenterteilung: **12.10.2022**
(21) Anmeldenummer: 16203488.8
(22) Anmeldetag: 12.12.2016
(51) Int. Cl.: A61C 13/00, A61C 1/00

(54) **VERFAHREN ZUM ERZEUGEN EINES DENTALRESTAURATIONSTEILS SOWIE DENTALBEARBEITUNGSMASCHINE**
METHOD FOR GENERATING A DENTAL RESTORATION PART AND DENTAL PROCESSING MACHINE
PROCÉDÉ DE PRODUCTION D'UNE PARTIE DE RESTAURATION DENTAIRE ET MACHINE D'USINAGE DENTAIRE

(43) Veröffentlichungstag der Anmeldung: 13.06.2018
(73) Patentinhaber: Huber, Martin, 5452 Pfarrwerfen (AT); Wörmer, Alfons, 5500 Bischofshofen (AT)
(72) Erfinder: Huber, Martin, 5452 Pfarrwerfen (AT)
(74) Vertreter: Baronetzky, Klaus

(56) Entgegenhaltungen:
- DE-A1-102005 001 600
- DE-A1-102012 106 849
- US-A1- 2005 246 052
- US-A1- 2012 148 985

## Beschreibung

Die Erfindung betrifft ein Verfahren zum Erzeugen eines Dentalrestaurationsteils gemäß dem Oberbegriff von Anspruch 1. Die Erfindung betrifft des Weiteren eine Dentalbearbeitungsmaschine gemäß dem Oberbegriff von Anspruch 7.

Herkömmliche Dentalbearbeitungsmaschinen bearbeiten Werkstücke im Wesentlichen nach einem Verfahren, gemäß welchem das Werkstück in Übereinstimmung mit vorgegebenen Parametern bearbeitet oder gefräst wird, wobei ein Bearbeitungswerkzeug der Dentalbearbeitungsmaschine zum Erzeugen einer gewünschten Kontur bzw. Oberfläche entlang einer vorgegebenen Bearbeitungsbahn bewegt wird. Das Bearbeitungswerkzeug wird hierbei herkömmlicherweise relativ zu dem Werkstück derart bewegt, dass dieses in das Werkstück eintaucht und nach Abfahren der vorgegebenen Bearbeitungsbahn von dem Werkstück absetzt und eine neue Bearbeitungsbahn beginnt. Das Bearbeitungswerkzeug setzt somit bis zur Fertigstellung des Dentalrestaurationsteils eine Vielzahl von Malen an das zu bearbeitende Werkstück an und wiederum von diesem ab, um das Bearbeitungswerkzeug relativ zum Werkstück zu repositionieren und eine neue Bearbeitungsbahn abzufahren.

Die DE 10 2005 001 600 A1 beschreibt ein Verfahren zur Material abtragenden Bearbeitung von Werkstücken, bei dem das Werkstück durch Eingriff eines zumindest abschnittsweise zylindrischen und/oder kegelstumpfförmigen rotierenden Werkzeugs ausgehend von einem Rohteil, in eine Endkontur gebracht wird. Es ist vorgesehen, dass das rotierende Werkzeug sowohl stirnseitig als auch mantelseitig mit dem Werkstück in Eingriff gebracht wird, wobei eine Relativbewegung des Werkzeugs im Wesentlichen vom eingespannten Werkstück weg erfolgt.

Die DE 10 2008 027 941 B4 offenbart ein Verfahren zum Drehfräsen von runden Abschnitten von Werkstücken, bei dem ein Drehfräswerkzeug mit mindestens einer Stirnschneidkante um eine Werkzeugdrehachse drehend angetrieben wird, die eine Exzentrizität bezüglich einer Werkstückdrehachse aufweist, und das Drehfräszeug unter fortwährender Verringerung der Exzentrizität durch Zustellung in Richtung der Werkzeugdrehachse mit dem Werkstück in Eingriff gebracht wird.

Die DE 10 2010 061 116 A1 offenbart ein Verfahren zur materialabtragenden Bearbeitung eines insbesondere flächigen Rohlings zur Herstellung von dentalen Werkstücken, wie insbesondere von Inlays, Kronen, Brücken, Stegen, Implantatssuprakonstruktionen oder dergleichen, bei dem mit einem rotierenden Werkzeug abwechselnd eine Kroneninnenseite des Werkstücks in der Intrados-Position des Rohlings und eine Kronenaußenseite in der Extrados-Position des Rohlings bearbeitet wird. Um für den wesentlichen Materialabtrag die Seitenflächen des Werkzeugarbeitsteils einzusetzen, wird zusätzlich eine Bearbeitung des Werkstücks in einer zwischen der Intrados-Position und der Extrados-Position winkelhalbierenden Position des Rohlings in einer Metados-Position durchgeführt.

Die US 2012/148985 A1 beschreibt ein Verfahren zur Bearbeitung eines Dentalrestaurationsteils, welches die Wahrscheinlichkeit von Werkzeugausfällen minimieren soll. Das Werkstück sowie das Werkzeug lassen sich um je eine Rotationsachse drehen. Das Werkzeug folgt einem spiralförmigem Fräsweg, der sich von außen am Werkstück nach innen hin bewegt.

Die DE 10 2015 010 322 A1 offenbart ein Verfahren zum Fräsen eines Werkstücks, bei welchem das Werkstück mittels eines Fräsers zumindest in einem konkaven Teilbereich gefräst wird, indem der Fräser entlang einer Fräsbahn relativ zu dem Werkstück bewegt wird, wobei die Fräsbahn zumindest in einem Bereich, in welchem der Fräser beim Fräsen des konkaven Teilbereichs bewegt wird, einen Trochoid-ähnlichen Verlauf aufweist.

Der Erfindung liegt somit die Aufgabe zugrunde, ein verbessertes Verfahren zum Erzeugen eines Dentalrestaurationsteils bereitzustellen, welches eine effizientere Bearbeitungsbahn des Werkstücks mittels des Bearbeitungswerkzeugs vorsieht, wodurch eine Bearbeitungszeit verkürzt und eine Bearbeitungsqualität erhöht werden kann. Die effizientere Bearbeitungsbahn durch das Bearbeitungswerkzeug bietet weiterhin den Vorteil, dass ein Werkstückverschleiß verringert als auch ein Risiko eines Absplitterns des Werkstücks während der Bearbeitung verringerbar ist.

Die Aufgabe wird mit einem Verfahren zum Erzeugen eines Dentalrestaurationsteils mit den Merkmalen von Patentanspruch 1 gelöst. Des Weiteren wird die Aufgabe mit einer Dentalbearbeitungsmaschine mit den Merkmalen des Patentanspruchs 7 gelöst.

Die vorliegende Erfindung schafft ein Verfahren zum Erzeugen eines Dentalrestaurationsteils unter Verwendung einer für eine Zahnarztpraxis bestimmten Dentalbearbeitungsmaschine, welche einen Mehrachsen-Werkstückarm und mindestens eine Werkzeugspindel aufweist, wobei in einem ersten Schritt ein sich drehendes Bearbeitungswerkzeug ein Werkstück fräst, während es, abgesehen von mindestens einem Eintritts- und/oder Austrittsweg, in fortwährendem Kontakt mit dem Werkstück ist, indem es im Wesentlichen spiralförmig das vollständige Außenprofil des Werkstücks bearbeitet. Mit der Erfindung lassen sich auch komplizierte dreidimensionale Strukturen drehfräsen. Entlang der Spiralachse betrachtet liegt dann immer noch ein spiralförmiger Verlauf der Bearbeitung vor, wobei es sich versteht, dass die Form in den beiden anderen Dimensionen betrachtet ganz erheblich von einer Kreisform abweichen kann. Erfindungsgemäß besteht während der Bearbeitung, also nach dem Erstkontakt und vor dem Letztkontakt des Bearbeitungswerkzeugs mit dem Werkstück fortwährender Kontakt zwischen diesen. Hierdurch werden stets die im wesentlichen gleichen Bearbeitungskräfte ausgeübt. Der Bearbeitungsstrang wird unter Spannung gehalten, so dass ein etwaiges Antriebsspiel nicht zur Geltung kommt. Die Bearbeitungsgenauigkeit steigt erheblich an.

Gemäß dem Verfahren wird im ersten Schritt das Werkstück gefräst, wobei das Werkstück zu einem konvexen, also konkavitätenfreien, Zwischenprodukt umgewandelt wird und in einem zweiten Schritt, ebenfalls per Fräsen, eine Kavität des Werkstücks durch zunehmendes Eintauchen in diese unter Erzeugung einer konkaven Form das Werkstück fertig bearbeitet wird.

Die Erfindung schafft überdies eine Dentalbearbeitungsmaschine, mit insbesondere Zahnarztpraxis-Dentalbearbeitungsmaschine, mit einem Mehrachsen-Werkstückarm und einer motorisch angetriebenen Werkzeugspindel, und mit einer Steuervorrichtung für die Bearbeitungsstrategie der Dentalbearbeitungsmaschine, wobei die Steuervorrichtung, insbesondere abgesehen von einem Eintritts- und Austrittsweg, die Bewegung des Mehrachsen-Werkstückarms unter Beibehaltung einer im wesentlichen fortlaufenden Berührung zwischen Bearbeitungswerkzeug und Werkstück, also mit 0 Prozent Luftkampf, steuern kann, indem im Wesentlichen spiralförmig das Außenprofil des Werkstücks drehbearbeitet werden kann.

Eine Idee der vorliegenden Erfindung ist es, eine Strategie für Bearbeitungsbahnen des Bearbeitungswerkzeugs der Werkzeugmaschine am Werkstück vorzusehen, mit welcher sämtliche mögliche Geometrien realisierbar sind. Entscheidend hierbei ist die Umsetzung des erfindungsgemäßen Merkmals, dass das Bearbeitungswerkzeug in fortwährendem Kontakt mit dem Werkstück ist, d.h., entlang einer einzelnen Bearbeitungsbahn die vollständige zu erstellende Geometrie des Werkstücks herstellt, ohne von dem Werkstück abzusetzen.

Eine solche Bearbeitungsstrategie sieht in vorteilhafter Weise bestmögliche Schnittbedingungen des Bearbeitungswerkzeugs vor, da auf diese Weise die durch bei herkömmlichen Bearbeitungsstrategien erzeugten Unebenheiten durch An- und Absetzen vom Werkstück vermieden werden können. Ebenso können Absplitterungen beim Bearbeiten des Werkstücks beim Bearbeiten von zerbrechlichen Materialien, wie z.B. Glaskeramik oder dergleichen, verringert werden. Dies kann in vorteilhafter Weise durch die spiralförmige, d.h. eckenlose, Bearbeitungsbahn des Bearbeitungswerkzeugs am Werkstück realisiert werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass in einem zweiten Schritt eine Kavität des Werkstücks bearbeitet wird. Die vorstehend genannte Bearbeitungsstrategie der spiralförmigen Bearbeitung des Werkstücks mittels des Bearbeitungswerkzeugs ist somit ebenfalls zum Ausbilden einer Kavität des Werkzeugs verwendbar.

Gemäß einer weiteren bevorzugten Weiterbildung ist vorgesehen, dass das Bearbeiten mit einer konstanten Vorschubgeschwindigkeit erfolgt. Somit kann in vorteilhafter Weise ein konstanter Materialabtrag des Werkstücks und dadurch bedingt die Ausbildung einer präzisen Oberflächengeometrie erfolgen.

Gemäß der Erfindung ist vorgesehen, dass pro Bearbeitungsschritt höchstens eine Annäherung zwischen Werkstück und Bearbeitungswerkzeug und höchstens ein Entfernen von Werkstück und Bearbeitungswerkzeug erfolgt und insbesondere höchstens zwei Bearbeitungsschritte für die Erzeugung des Dentalrestaurationsteils mittels der Dentalbearbeitungsmaschine vorgesehen sind. Das Vorsehen von höchstens zwei Bearbeitungsschritten bietet somit in vorteilhafter Weise ein effizientes Verfahren zum Herstellen des Dentalrestaurationsteils, bei welchem sowohl die äußere Geometrie als auch die Kavität des Werkstücks effizient und präzise erstellbar sind.

Erfindungsgemäß ist es vorgesehen, dass während des ersten Schritts und des zweiten Schritts ein konstanter Druck zwischen Werkstück und Bearbeitungswerkzeug bereitgehalten wird und dass Richtungsänderungen des Bearbeitens soweit wie möglich vermieden werden. Aufgrund der Halterung des Werkstücks an dem Mehrachsen-Werkstückarm kann das Werkstück relativ zum Bearbeitungswerkzeug derart räumlich bewegt und/oder gedreht werden, dass zwischen Werkstück und Bearbeitungswerkzeug bei dem Abfahren der vorgegebenen Bearbeitungsbahn stets ein konstanter Druck zwischen Werkstück und Bearbeitungswerkzeug vorhanden ist. Ebenso können aufgrund der Bewegbarkeit des Werkstücks relativ zum Bearbeitungswerkzeug Richtungsänderungen des Bearbeitens im Sinne einer Richtungsänderung des Bearbeitungswerkzeugs vermieden werden.

Gemäß einer weiteren bevorzugten Weiterbildung ist vorgesehen, dass bei einer zu erzeugenden Ecke des Dentalrestaurationsteils durch den Werkstückarm das Werkstück so gedreht wird, dass die Richtung der von dem Werkstück auf das Bearbeitungswerkzeug ausgeübten Kraft so wenig wie möglich geändert wird, insbesondere beibehalten wird, unter Beibehaltung einer Durchbiegung des Bearbeitungswerkzeugs durch die ausgeübte Bearbeitungskraft. Somit kann in vorteilhafter Weise eine höchst präzise Geometrie des Dentalrestaurationsteils hergestellt werden.

Gemäß einer weiteren bevorzugten Weiterbildung ist vorgesehen, dass in einem zusätzlichen dritten Schritt an einer Präparationsgrenze, an der Okklusionsfläche und/oder an einem Anschluss des Werkstücks gefräst wird. Somit kann in vorteilhafter Weise ein Polieren bzw. eine Endbearbeitung des Werkstücks durchgeführt werden.

Gemäß einer weiteren bevorzugten Weiterbildung ist vorgesehen, dass in einem Bearbeitungsschritt grundsätzlich spiralförmig bearbeitet wird, insbesondere auch an einer gingivalen Kavität des Werkstücks. Somit kann ein gleichmäßiger Materialabtrag bzw. eine gleichförmige Oberflächengüte des Dentalrestaurationsteils auch im Bereich der gingivalen Kavität des Werkstücks bereitgestellt werden.

Gemäß einer weiteren bevorzugten Weiterbildung ist vorgesehen, dass bei Inlays, Onlays und/ oder Veneers als Dentalrestaurationsteilen der Rand spiralförmig in einer Weise gefräst wird, dass die Bearbeitungsrichtung stets dem Rand zugewandt ist. Dies ermöglicht in vorteilhafter Weise, dass der Rand des Werkstücks eine sanfte bzw. abgerundete Kontur aufweist.

Gemäß einer weiteren bevorzugten Weiterbildung ist vorgesehen, dass bei der Bearbeitung das Werkstück relativ zu dem Bearbeitungswerkzeug einen spiralförmigen Weg durchläuft, und ein im Wesentlichen konstantes Abtragvolumen pro Zeiteinheit in dem ersten Schritt erzeugt wird, und insbesondere eine konstante Kraft zwischen Werkstück und Bearbeitungswerkzeug bereitgestellt wird. Auf diese Weise kann in vorteilhafter Weise eine präzise Oberflächengeometrie des zu erstellenden Dentalrestaurationsteils erzeugt werden, wobei dies in effizienter Weise erfolgt, wodurch in vorteilhafter Weise eine Bearbeitungszeit reduziert ist.

Gemäß einer weiteren bevorzugten Weiterbildung ist vorgesehen, dass die Steuervorrichtung dazu ausgebildet ist, eine mögliche gingivale Kavität des Werkstücks zu bearbeiten. Somit kann ein gleichmäßiger Materialabtrag bzw. eine gleichförmige Oberflächengüte des Dentalrestaurationsteils auch im Bereich der gingivalen Kavität des Werkstücks bereitgestellt werden.

Erfindungsgemäß ist es vorgesehen, dass die Dentalbearbeitungsmaschine als 5/0-Achsen-Fräsmaschine ausgebildet ist, also mit fünf Achsen für den Mehrachsen-Werkstückarm und null Achsen für das Bearbeitungswerkzeug, und dass während des ersten Schritts insbesondere vier Achsen und während eines zweiten Schritts fünf Achsen eingesetzt werden. Somit kann das Werkstück relativ zu dem sich drehenden Bearbeitungswerkzeug eine jegliche vorgegebene Bearbeitungsbahn abfahren, wodurch sämtliche mögliche Oberflächengeometrien des Dentalrestaurationsteils realisierbar sind. Zudem ist die Präzision des Bearbeitens, insbesondere des Drehschleifens, bei dieser Achsverteilung ausgesprochen gut. Durch die gleichmäßige Belastung des Werkstückarms wirkt sich das typischerweise vorhandene Achsen-Gelenkspiel überhaupt nicht aus. Jedes Lager bleibt einseitig auf Anlage, also auf "Anschlag". Die Genauigkeit der Bearbeitung kann mit wenigen 10 Mikrometern erfolgen.

Gemäß einer weiteren bevorzugten Weiterbildung ist vorgesehen, dass ein Vorschub der Dentalbearbeitungsmaschine so angepasst wird, dass konstante Schnittbedingungen vorliegen und insbesondere die Drehzahl der Dentalbearbeitungsmaschine in einem Bereich zwischen 2.000 U/min und 50.000 U/min anpassbar ist. Durch das Vorsehen konstanter Schnittbedingungen kann somit in vorteilhafter Weise ein gleichmäßiger Oberflächenabtrag realisiert werden. Um diesen zu ermöglichen, dient somit die Kombination des Vorsehens konstanter Schnittbedingungen sowie die Anpassbarkeit der Drehzahl der Bearbeitungsmaschine, um somit den gleichmäßigen Materialabtrag für ein präzises Abtragergebnis zu realisieren.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung eines Materialabtrags an einem Werkstück gemäß einer bevorzugten Ausführungsform der Erfindung;
- Fig. 2: eine schematische Darstellung eines Materialabtrags an einem Werkstück gemäß einer weiteren bevorzugten Ausführungsform der Erfindung;
- Fig. 3: eine schematische Darstellung eines Materialabtrags an einem Werkstück gemäß der bevorzugten Ausführungsform der Erfindung;
- Fig. 4: eine schematische Darstellung eines Materialabtrags an einem Werkstück gemäß der bevorzugten Ausführungsform der Erfindung; und
- Fig. 5: eine schematische Darstellung einer Dentalbearbeitungsmaschine gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

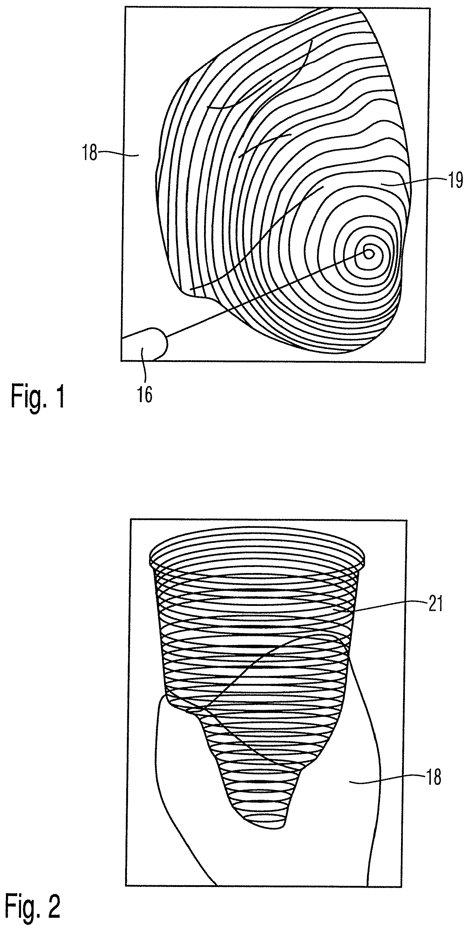

Fig. 1 zeigt eine schematische Darstellung eines Materialabtrags an einem Werkstück gemäß einer bevorzugten Ausführungsform der Erfindung.

Das Verfahren zum Erzeugen eines Dentalrestaurationsteils unter Verwendung einer (in Fig. 1 nicht gezeigten) Werkzeugmaschine umfasst, dass in einem ersten Schritt ein sich drehendes Bearbeitungswerkzeug 16, ein Werkstück 18 drehbearbeitet. Alternativ hierzu kann das sich drehende Bearbeitungswerkzeug 16 das Werkstück 18 beispielsweise drehfräsen oder schleifen. Das Bearbeitungswerkzeug 18 ist abgesehen von mindestens einem Eintritts- und/oder Austrittsweg in fortwährendem Kontakt mit dem Werkstück 18. Das Bearbeitungswerkzeug 16 weist somit 0 % Luftkampf auf, indem es im Wesentlichen spiralförmig das vollständige Außenprofil 19 des Werkstücks 18 bearbeitet.

Das Bearbeiten des Werkstücks 18 erfolgt vorzugsweise mit einer konstanten Vorschubgeschwindigkeit. Alternativ kann die Vorschubgeschwindigkeit des Bearbeitungswerkzeugs je nach Bearbeitungsgeometrie bzw. dem zu bearbeitenden Material in Abhängigkeit von einer Drehzahl des Bearbeitungswerkzeugs variiert werden.

Pro Bearbeitungsschritt erfolgt höchstens eine Annäherung zwischen Werkstück 18 und Bearbeitungswerkzeug 16 und höchstens ein Entfernen von Werkstück 18 und Bearbeitungswerkzeug 16. Ferner weist das Verfahren höchstens zwei Bearbeitungsschritte für die Erzeugung des Dentalrestaurationsteils mittels der Dentalbearbeitungsmaschine auf. Damit kann vorzugsweise eine hohe Bearbeitungseffizienz und -Güte erreicht werden.

Während des ersten Schritts und des zweiten Schritts ist ein konstanter Druck zwischen Werkstück und Bearbeitungswerkzeug vorgesehen. Richtungsänderungen des Bearbeitens werden so weit wie möglich vermieden. Bei einer zu erzeugenden Ecke des Dentalrestaurationsteils durch den (in Fig. nicht gezeigten) Werkstückarm wird das Werkstück vorzugsweise derart gedreht, dass die Richtung der von dem Werkstück auf das Bearbeitungswerkzeug ausgeübten Kraft so wenig wie möglich geändert wird. Insbesondere wird die Richtung der von dem Werkstück 18 auf das Bearbeitungswerkzeug 16 ausgeübten Kraft beibehalten, unter Beibehaltung einer Durchbiegung des Bearbeitungswerkzeugs 16 durch die ausgeübte Bearbeitungskraft.

Das Werkstück 18 durchläuft bei der Bearbeitung relativ zum Bearbeitungswerkzeug 16 einen spiralförmigen Weg. Es wird im Wesentlichen ein konstantes Abtragvolumen pro Zeiteinheit in dem ersten Schritt erzeugt. Des Weiteren wird eine konstante Kraft zwischen Werkstück 18 und Bearbeitungswerkzeug 16 bereitgestellt. Die (in Fig. 1 nicht gezeigte) Dentalbearbeitungsmaschine ist als 5/0-Achsen-Fräsmaschine ausgebildet. Der Mehrachsen-Werkstückarm weist somit fünf Achsen und das Bearbeitungswerkzeug 16 null Achsen auf. Während des ersten Schritts werden vorzugsweise vier Achsen und während des zweiten Schritts fünf Achsen eingesetzt. Fig. 2 zeigt eine schematische Darstellung eines Materialabtrags an einem Werkstück gemäß einer weiteren bevorzugten Ausführungsform der Erfindung.

Das Verfahren zum Erzeugen des Dentalrestaurationsteils umfasst in einem ersten Schritt, dass ein sich drehendes Bearbeitungswerkzeug (welches in Fig. 2 nicht dargestellt ist) das Werkstück 18 drehbearbeitet. Alternativ kann das Werkstück 18 beispielsweise drehgefräst oder geschliffen werden.

Bei dieser Bearbeitung wird das Werkstück 18 zu einem konvexen, also konkavitätsfreien Zwischenprodukt erzeugt und in einem zweiten Schritt, ebenfalls durch Drehbearbeiten oder alternativ Drehfräsen, eine Kavität 21 des Werkstücks 18 durch zunehmendes Eintauchen in diese unter Erzeugung einer konkaven Form das Werkstück fertig bearbeitet. Das Bearbeiten erfolgt grundsätzlich spiralförmig. Es erfolgt des Weiteren ein konstantes Abtragvolumen pro Zeiteinheit und es liegt insbesondere eine konstante Kraft zwischen Werkstück 18 und dem Bearbeitungswerkzeug an.

Bei der in Fig. 2 dargestellten Fräsung für ein Inlay als Dentalrestaurationsteil wird der Rand 24 spiralförmig in einer Weise gefräst, dass die Bearbeitungsrichtung stets dem Rand 24 zugewandt ist. Gleiches gilt im Falle von beispielsweise Onlays und/oder Veneers als Dentalrestaurationsteilen.

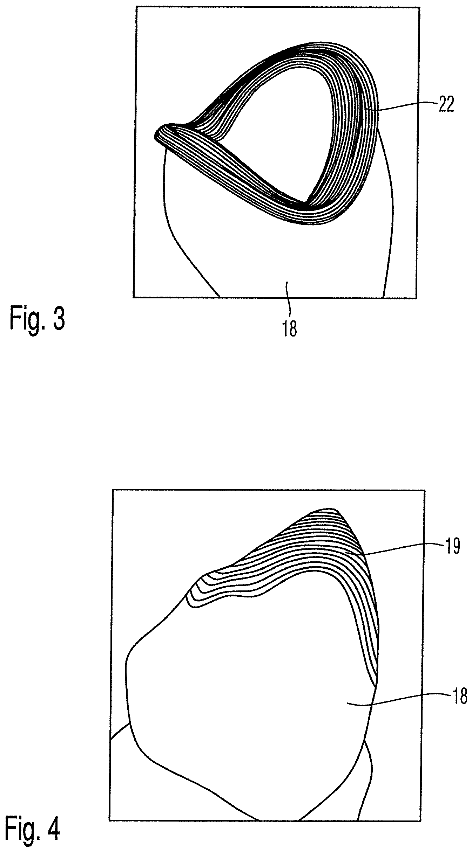

Fig. 3 zeigt eine schematische Darstellung eines Materialabtrags an einem Werkstück gemäß der bevorzugten Ausführungsform der Erfindung. In einem zusätzlichen dritten Schritt wird an einer Präparationsgrenze 22 des Werkstücks 18 gefräst. Zusätzlich oder alternativ kann beispielsweise an einer Okklusionsfläche und/oder an einem Anschluss des Werkstücks 18 gefräst werden.

Fig. 4 zeigt eine schematische Darstellung eines Materialabtrags an einem Werkstück gemäß der bevorzugten Ausführungsform der Erfindung. Die in Fig. 4 gezeigte Endbearbeitung der okklusalen Oberfläche des Werkstücks 18 erfolgt ebenfalls durch Abfahren eines spiralförmigen Bearbeitungswegs durch das Werkstück relativ zum Bearbeitungswerkzeug.

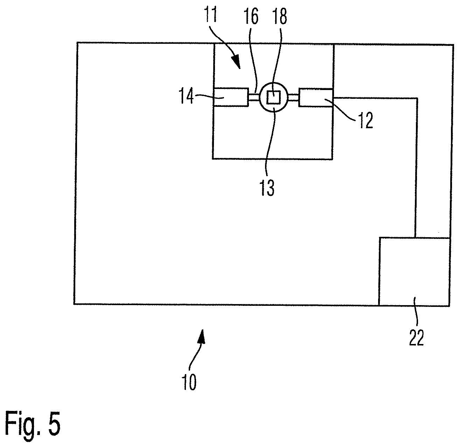

Fig. 5 zeigt eine schematische Darstellung einer Dentalbearbeitungsmaschine gemäß der bevorzugten Ausführungsform der Erfindung.Die Dentalbearbeitungsmaschine bzw. die Werkzeugmaschine 10 weist einen Mehrachsen-Werkstückarm 12 und eine motorisch angetriebene Werkzeugspindel 14 auf. Des Weiteren weist die Dentalbearbeitungsmaschine eine Steuervorrichtung 26 auf für die Bearbeitungsstrategie der Bearbeitungsmaschine.

Die Steuervorrichtung 26 ist dazu ausgebildet, einen Eintritts- und Austrittsweg, eine Bewegung des Mehrachsen-Werkstückarms 12 unter Beibehaltung einer fortlaufenden Berührung oder Bewegung zwischen Bearbeitungswerkzeug 16 und Werkstücks 18, also mit 0 % Luftkampf, zu steuern. Dies wird dadurch realisiert, dass ein Außenprofil des Werkstücks 18 im Wesentlichen spiralförmig drehbearbeitet wird. Die Steuervorrichtung 26 ist ferner dazu ausgebildet, eine mögliche gingivale Kavität des Werkstücks 18 zu bearbeiten.

Die Dentalbearbeitungsmaschine ist vorzugsweise als 5/10-Achsen-Fräsmaschine ausgebildet. Demnach weist der Mehrachsen-Werkstückarm fünf Achsen und das Bearbeitungswerkzeug 16 null Achsen auf. Während des ersten Schritts werden hierbei insbesondere vier Achsen und während des zweiten Schritts fünf Achsen eingesetzt. Ein Vorschub der Dentalbearbeitungsmaschine ist vorzugsweise derart anpassbar, dass konstante Schnittbedingungen vorliegen und insbesondere eine Drehzahl der Dentalbearbeitungsmaschine in einem Bereich zwischen 2.000 U/min und 50.000 U/min anpassbar ist.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise ist eine Bearbeitungsstrategie bzw. eine vorgegebene Bearbeitungsbahn derart an eine Geometrie des Werkstücks anpassbar, dass eine Dimensionierung der Bearbeitungsbahn, insbesondere der spiralförmigen Bearbeitungsbahn, an die zu erzeugende Geometrie des Werkstücks anpassbar ist. Insbesondere kann die spiralförmige Bearbeitungsbahn derart dimensionsmäßig variiert werden, dass eine jegliche Geometrie des Werkstücks bzw. des zu erzeugenden Dentalrestaurationsteils herstellbar ist.

## Patentansprüche

1. Verfahren zum Erzeugen eines Dentalrestaurationsteils unter Verwendung einer für eine Zahnarztpraxis bestimmten Dentalbearbeitungsmaschine, welche einen Mehrachsen-Werkstückarm (12) und mindestens eine Werkzeugspindel (14) aufweist, wobei in einem ersten Bearbeitungsschritt ein sich drehendes Bearbeitungswerkzeug (16) ein Werkstück (18) fräst, während es, abgesehen von einem Eintritts- und einem Austrittsweg, in fortwährendem Kontakt mit dem Werkstück (18) ist, indem es im Wesentlichen spiralförmig das vollständige Außenprofil (19) des Werkstücks (18) bearbeitet, **dadurch gekennzeichnet, dass** ein Bearbeitungsstrang unter Spannung gehalten wird und ein konstanter Druck zwischen Werkstück und Bearbeitungswerkzeug ausgeübt wird und dass die Dentalbearbeitungsmaschine als 5/0-Achsen-Fräsmaschine ausgebildet ist, also mit fünf Achsen für den Mehrachsen-Werkstückarm (12) und null Achsen für das Bearbeitungswerkzeug (16).

2. Verfahren nach Anspruch 1, **dadurch gekennzeichnet, dass** in einem zweiten Bearbeitungsschritt eine Kavität (21 ) des Werkstücks (18) bearbeitet wird.

3. Verfahren nach einem der vorhergehenden Ansprüche, **dadurch gekennzeichnet, dass** pro Bearbeitungsschritt höchstens eine Annäherung zwischen Werkstück (18) und Bearbeitungswerkzeug (16) und höchstens ein Entfernen von Werkstück (18) und Bearbeitungswerkzeug (16) erfolgt und insbesondere höchstens zwei Bearbeitungsschritte für die Erzeugung des Dentalrestaurationsteils mittels der Dentalbearbeitungsmaschine vorgesehen sind.

4. Verfahren nach einem der vorhergehenden Ansprüche, **dadurch gekennzeichnet, dass** bei einer zu erzeugenden Ecke des Dentalrestaurationsteils durch den Werkstückarm (12) das Werkstück (18) so gedreht wird, dass die Richtung der von dem Werkstück (18) auf das Bearbeitungswerkzeug (16) ausgeübten Kraft beibehalten wird, unter Beibehaltung einer Durchbiegung des Bearbeitungswerkzeugs (16) durch die ausgeübte Bearbeitungskraft.

5. Verfahren nach einem der vorhergehenden Ansprüche, **dadurch gekennzeichnet, dass** in einem Bearbeitungsschritt grundsätzlich spiralförmig bearbeitet wird, insbesondere auch an einer gingivalen Kavität (21) des Werkstücks (18).

6. Verfahren nach einem der vorhergehenden Ansprüche, **dadurch gekennzeichnet, dass** bei Inlays, Onlays und/oder Veneers als Dentalrestaurationsteilen der Rand (24) spiralförmig in einer Weise gefräst wird, dass die Bearbeitungsrichtung stets dem Rand (24) zugewandt ist.

7. Dentalbearbeitungsmaschine, mit insbesondere Zahnarztpraxis-Dentalbearbeitungsmaschine, mit einem Mehrachsen-Werkstückarm (12) und einer motorisch angetriebenen Werkzeugspindel (14), und mit einer Steuervorrichtung (22) für die Bearbeitungsstrategie der Dentalbearbeitungsmaschine, wobei die Steuervorrichtung ausgebildet ist, abgesehen von einem Eintritts- und Austrittsweg, die Bewegung des Mehrachsen-Werkstückarms (12) unter Beibehaltung einer fortlaufenden Berührung zwischen Bearbeitungswerkzeug (16) und Werkstück (18)zu steuern, indem im Wesentlichen spiralförmig das vollständige Außenprofil (19) des Werkstücks (18) gefräst wird, **dadurch gekennzeichnet, dass** der Bearbeitungsstrang unter Spannung gehalten werden kann, dass ein konstanter Druck zwischen Werkstück und Bearbeitungswerkzeug gewährleistet werden kann und dass die Dentalbearbeitungsmaschine eine 5/0-Achsen-Fräsmaschine ist, also mit fünf Achsen für den Mehrachsen-Werkstückarm (12) und null Achsen für das Bearbeitungswerkzeug (16).

8. Dentalbearbeitungsmaschine nach Anspruch 7, **dadurch gekennzeichnet, dass** die Steuervorrichtung (22) dazu ausgebildet ist, eine mögliche Kavität (21) des Werkstücks (18) zu bearbeiten.

9. Dentalbearbeitungsmaschine nach einem der Ansprüche 7 bis 8, **dadurch gekennzeichnet, dass** ein Vorschub der Dentalbearbeitungsmaschine so angepasst werden kann, dass konstante Schnittbedingungen vorliegen und eine Drehzahl der Dentalbearbeitungsmaschine in einem Bereich zwischen 2.000 U/min und 50.000 U/min anpassbar ist.

## Claims

1. A method for producing a dental restoration part using a dental machining machine intended for a dentist's office, comprising a multi-axis workpiece arm (12) and at least one tool spindle (14), wherein, in a first machining step, a rotating machining tool (16) mills a workpiece (18), while, except for one entry and one exit path, it is in continuous contact with the workpiece (18), by machining the complete outer profile (19) of the workpiece (18) substantially helically, **characterized in that** a machining thread is kept under tension and constant pressure is applied between workpiece and machining tool, and **in that** the dental machining machine is designed as a 5/0-axis milling machine, i.e. comprising five axes for the multi-axis workpiece arm (12) and zero axes for the machining tool (16).

2. The method according to claim 1, **characterized in that,** in a second machining step, a cavity (21) of the workpiece (18) is machined.

3. The method according to one of the preceding claims, **characterized in that** per machining step at most one approach occurs between the workpiece (18) and the machining tool (16) and at most one removal of the workpiece (18) and the machining tool (16) occurs, and, especially at most two machining steps are provided for the production of the dental restoration part by means of the dental machining machine.

4. The method according to one of the preceding claims, **characterized in that,** at an edge of the dental restoration part to be produced, the workpiece (18) is rotated by the workpiece arm (12), such that the direction of the force exerted by the workpiece (18) on the machining tool (16) is maintained, while maintaining a deflection of the machining tool (16) by way of the exerted machining force.

5. The method according to one of the preceding claims, **characterized in that,** in a machining step, machining is basically carried out helically, especially also on a gingival cavity (21) of the workpiece (18).

6. The method according to one of the preceding claims, **characterized in that,** with inlays, onlays and/or veneers as dental restoration parts, the edge (24) is milled in a helical shape such that the machining direction always faces towards the edge (24).

7. A dental machining machine, especially a dentist's office dental machining machine, having a multi-axis workpiece arm (12) and a motor-driven tool spindle (14), and having a control device (22) for the machining strategy of the dental machining machine, wherein the control device is configured to control the movement of the multi-axis workpiece arm (12), except for an entry and exit path, while maintaining continuous contact between the machining tool (16) and the workpiece (18) by substantially helically milling the complete outer profile (19) of the workpiece (18), **characterized in that** the machining thread can be kept under tension, that constant pressure can be guaranteed between workpiece and machining tool, and **in that** the dental machining machine is a 5/0-axis milling machine, i.e. comprising five axes for the multi-axis workpiece arm (12) and zero axes for the machining tool (16).

8. The dental machining machine according to claim 7, **characterized in that** the control device (22) is designed to machine a possible cavity (21) of the workpiece (18).

9. The dental machining machine according to one of claims 7 to 8, **characterized in that** a feed of the dental machining machine can be adapted such that constant cutting conditions are present and a rotational speed of the dental machining machine can be adapted in a range between 2,000 rpm and 50,000 rpm.

## Revendications

1. Procédé de fabrication d'une pièce de restauration dentaire à l'aide d'une machine d'usinage dentaire destinée à un cabinet dentaire et comprenant un bras porte-pièce multi-axes (12) et au moins une broche porte-outil (14), où, dans une première étape d'usinage, un outil d'usinage rotatif (16) fraise une pièce (18) tout en étant en contact continu avec la pièce (18), à l'exception d'un trajet d'entrée et d'un trajet de sortie, en usinant sensiblement en spirale le profil extérieur complet (19) de la pièce (18), **caractérisé en ce qu'**un cordon d'usinage est maintenu sous tension et une pression constante est exercée entre la pièce et l'outil d'usinage, et **en ce que** la machine d'usinage dentaire est conçue comme une machine de fraisage à 5/0 axes, c'est-à-dire avec cinq axes pour le bras porte-pièce multi-axes (12) et zéro axe pour l'outil d'usinage (16).

2. Procédé selon la revendication 1, **caractérisé en ce que**, dans une deuxième étape d'usinage, une cavité (21) de la pièce (18) est usinée.

3. Procédé selon l'une des revendications précédentes, **caractérisé en ce que**, par étape d'usinage, il y a au plus un rapprochement entre la pièce (18) et l'outil d'usinage (16) et au plus un éloignement de la pièce (18) et de l'outil d'usinage (16), et en particulier au plus deux étapes d'usinage sont prévues pour la réalisation de la pièce de restauration dentaire au moyen de la machine d'usinage dentaire.

4. Procédé selon l'une des revendications précédentes, **caractérisé en ce que**, pour un coin de la pièce de restauration dentaire à produire par le bras de pièce (12), la pièce (18) est tournée de telle sorte que la direction de la force exercée par la pièce (18) sur l'outil d'usinage (16) est maintenue, tout en conservant un fléchissement de l'outil d'usinage (16) par la force d'usinage exercée.

5. Procédé selon l'une quelconque des revendications précédentes, **caractérisé en ce qu'**il consiste à , qu'au cours d'une étape d'usinage, l'usinage est fondamentalement hélicoïdal, notamment aussi sur une cavité gingivale (21) de la pièce (18).

6. Procédé selon l'une des revendications précédentes, **caractérisé en ce qu'**il comprend une étape d'usinage de l'implant, que dans le cas d'inlays, d'onlays et/ou de facettes en tant que pièces de restauration dentaire, le bord (24) est fraisé en spirale de manière à ce que la direction d'usinage soit toujours orientée vers le bord (24).

7. Machine d'usinage dentaire, comprenant en particulier une machine d'usinage dentaire pour cabinet dentaire, avec un bras porte-pièce multiaxial (12) et une broche porte-outil (14) entraînée par un moteur, et avec un dispositif de commande (22) pour la stratégie d'usinage de la machine d'usinage dentaire, où le dispositif de commande est conçu pour commander, abstraction faite d'un trajet d'entrée et de sortie, le mouvement du bras porte-pièce multiaxial (12) en maintenant un contact continu entre l'outil d'usinage (16) et la pièce à usiner (18), en fraisant sensiblement en spirale le profil extérieur complet (19) de la pièce (18), **caractérisée en ce que** le train d'usinage peut être maintenu sous tension, **en ce qu'**une pression constante peut être assurée entre la pièce et l'outil d'usinage, et **en ce que** la machine d'usinage dentaire est une fraiseuse 5/0 axes, c'est-à-dire avec cinq axes pour le bras porte-pièce multi-axes (12) et zéro axe pour l'outil d'usinage (16).

8. Machine d'usinage dentaire selon la revendication 7, **caractérisée en ce que** le dispositif de commande (22) est conçu pour usiner une éventuelle cavité (21) de la pièce à usiner (18).

9. Machine d'usinage dentaire selon l'une des revendications 7à 8, **caractérisée en ce qu'**une avance de la machine d'usinage dentaire peut être adaptée de telle sorte que des conditions de coupe constantes soient présentes et qu'une vitesse de rotation de la machine d'usinage dentaire puisse être adaptée dans une plage comprise entre 2000 tr/min et 50 000 tr/min.
